# EUROPÄISCHE PATENTSCHRIFT

(11) **EP 1 108 122 B1**
(45) Veröffentlichungstag und Bekanntmachung des Hinweises auf die Patenterteilung: **20.03.2002**
(21) Anmeldenummer: 99950473.1
(22) Anmeldetag: 30.07.1999
(51) Int. Cl.: F01N 3/20, F01N 3/28, F01N 1/24

(54) **EINRICHTUNG ZUR KATALYTISCHEN ABGASREINIGUNG**
DEVICE FOR CATALYTIC EXHAUST GAS PURIFICATION
DISPOSITIF DE PURIFICATION CATALYTIQUE DE GAZ D'ECHAPPEMENT

(30) Priorität: 11.08.1998 DE 19836355
(43) Veröffentlichungstag der Anmeldung: 20.06.2001
(73) Patentinhaber: SIEMENS AKTIENGESELLSCHAFT, 80333 München (DE)
(72) Erfinder: RUSCH, Klaus, D-96129 Strullendorf (DE)
(86) Internationale Anmeldenummer: DE9902350
(87) Internationale Veröffentlichungsnummer: WO0009869

(56) Entgegenhaltungen:
- EP-A- 0 690 212
- EP-A- 0 779 415
- WO-A-97/43528
- DE-A- 19 741 199
- US-A- 5 431 893

## Beschreibung

Die Erfindung bezieht sich auf eine Einrichtung für die katalytische Beseitigung eines Schadstoffs aus dem Abgas einer Verbrennungsanlage, wie eines mit fossilem Brennstoff betriebenen Kraftwerks oder eines Verbrennungsmotors, mit einem Abgaskanal zur Leitung des Abgases, mit einer Eindüseinrichtung, die zur Einbringung eines Reaktionsmittels in das Abgas in einem Eindüsraum des Abgaskanals vorgesehen ist, und mit einem in dem Abgaskanal eingebauten Katalysator, wobei der Eindüsraum und ein gegebenenfalls nachgeschalteter Mischraum, der zur Vermischung des Reaktionsmittels mit dem Abgas vorgesehen ist, als Schalldämpfer ausgebildet sind.

Eine solche Einrichtung ist z.B. aus der EP 0 779 415 A1 bekannt.

Bei der Verbrennung eines fossilen Brennstoffs in einer Verbrennungsanlage entstehen in nicht unerheblichem Umfang Schadstoffe, wie Stickoxide (NOx), Kohlenwasserstoffe, Kohlenmonoxid und Schwefeloxide. Bei entsprechenden Verbrennungstemperaturen entstehen auch Dioxine und Furane. Diese Schadstoffe können über das Abgas der Verbrennungsanlage in die Umwelt gelangen. Eine derartige Verbrennungsanlage kann z.B. eine Kesselanlage, ein Fossilkraftwerk, aber auch ein Verbrennungsmotor sein.

Aufgrund strenger gesetzlicher Vorschriften, welche die Abgabe der obengenannten Schadstoffe limitieren, ist für Verbrennungsanlagen eine Behandlung des Abgases zur Verminderung der darin enthaltenen Schadstoffe erforderlich. Hierzu sind in der Vergangenheit eine Vielzahl von Katalysatoren entwickelt worden. So sind zur Verringerung von Stickoxiden die sogenannten DeNOx-Katalysatoren bekannt, welche die im Abgas enthaltenen Stickoxide (NOx) mit einem Reduktionsmittel, meist Ammoniak oder Harnstoff, nach dem Verfahren der Selektiven Katalytischen Reduktion (SCR) zu umweltneutralem Stickstoff und zu Wasser umsetzen. Das Reduktionsmittel wird in Strömungsrichtung des Abgases vor dem Katalysator in das Abgas eingebracht. Es tritt dann in nach Möglichkeit homogener Vermischung mit den im Abgas enthaltenen Stickoxiden in den Katalysator ein. Dabei können auch mehrere Katalysatoren hintereinander geschaltet sein.

Für die Verringerung der Schadstoffe im Abgas eines Otto-Motors sind beispielsweise edelmetallhaltige Katalysatoren bekannt, an denen Kohlenwasserstoffe und Kohlenmonoxid mit Stickoxiden zu Kohlendioxid, Stickstoff und/oder Wasser umgewandelt werden.

Zur Stickoxidentfernung aus dem Abgas eines Dieselmotors kann der bereits erwähnte DeNOx-Katalysator verwendet werden. Hier arbeitet man vorzugsweise mit Harnstoff. Dieser Harnstoff wird anforderungsgerecht in den Abgasstrom eingedüst. Mit einem solchen geregelten Diesel-Katalysator ist es möglich, den Stickoxidgehalt im Abgas des Dieselmotors erheblich zu senken.

Von einer SCR-Einrichtung für die katalytische Beseitigung von NOx im Abgas einer Verbrennungsanlage wird zunächst einmal eine deutliche und effektive Reduzierung der NOx-Emission verlangt. Daneben wird in der Regel auch eine Reduzierung der Schallemissionen gefordert. Dieser Schall entsteht durch den Betrieb der Verbrennungsanlage und stellt ein Problem für die Umwelt dar. Dabei besteht die Forderung, den Platzaufwand möglichst gering zu halten. Bisher hat man zur Reduzierung der Schallemission den Einbau eines separaten Schalldämpfers im Abgaskanal vorgesehen. Dadurch konnte die Schallemission unter die zulässigen Grenzwerte abgesenkt werden. Allerdings machen sich bei dieser Lösung zusätzliche Kosten, ein gestiegener Druckverlust und ein größerer Platzbedarf nachteilig bemerkbar.

Aufgabe der Erfindung ist es, eine Einrichtung der eingangs genannten Art so auszugestalten, daß kein unnötiger Platzbedarf für einen separaten Schalldämpfer entsteht, und daß eine weitere Verringerung der Schallemission auftritt.

Die Erfindung beruht auf der Überlegung, daß sich diese Aufgabe lösen läßt, wenn sich verschiedene Funktionen in einem bereits vorhandenen Bauteil zusammenfassen lassen.

Die genannte Aufgabe wird erfindungsgemäß dadurch gelöst, daß in Strömungsrichtung des Abgases vor und hinter dem Eindüsraum ein Mischer angeordnet ist, und daß der Abstand der beiden Mischer auf die zu dämpfende Frequenz des Schalls im Abgas abgestimmt ist.

Der Vorteil dieser Lösung besteht darin, daß sich aufgrund der genannten Ausgestaltung des Eindüs- und Mischraums als Schalldämpfer eine SCR-Katalysator-Anlage für das Abgas einer Verbrennungsanlage sehr kompakt und kostengünstig aufbauen läßt. Zwecks Schalldämpfung können/kann der Eindüsraum und/oder der Mischraum mit einem Lochblech oder einem flexiblen, dünnen, ein- oder doppelschichtigen Blech ausgekleidet sein. Bevorzugt sind/ist der Eindüsraum und/oder der Mischraum mit einer schalldämmenden Auskleidung versehen.

In der Regel werden der Eindüsraum und der Mischraum eine Baueinheit bilden.

Weitere vorteilhafte Ausgestaltungen sind in den Unteransprüchen gekennzeichnet.

Ausführungsbeispiele der Erfindung werden im folgenden anhand von zwei Figuren näher erläutert. Dabei werden dieselben Bezugszeichen für gleiche Bauteile verwendet. Es zeigen:
- FIG 1: eine senkrecht stehende SCR-Anlage mit senkrechtem Eindüs- und Mischraum und 180°-Umlenkung für das Abgas,
- FIG 2: einen rohrförmigen Eindüs- und Mischraum mit verschiedenen Ausgestaltungen zur Schalldämmung.

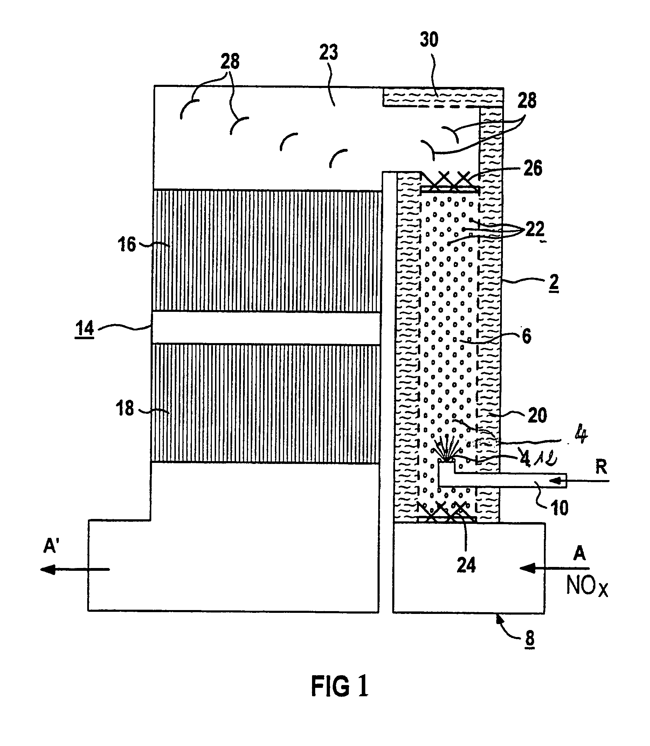

Nach Figur 1 wird NOx-haltiges Abgas A im Abgaskanal 8 zunächst um 90° abgelenkt und von unten in eine Baueinheit 2 geleitet, die wiederum mit einer schalldämmenden Auskleidung 20 und einem Lochblech 22 versehen ist. In den Eindüsraum 4 führt eine Eindüs-Einrichtung 10 mit einer Düse 12. Diese Eindüseinrichtung 10 ist zur Einbringung eines Reduktions- oder Reaktionsmittels R in das Abgas A, das sich im Eindüsraum 4 befindet, vorgesehen. Der nachgeordnete oder nachgeschaltete Mischraum 6 dient zur Vermischung des eingebrachten Reaktionsmittels R mit dem Abgas A. Als Reaktionsmittel R kann beispielsweise Ammoniak oder Harnstoff verwendet werden. Allgemein gesprochen: Das Reduktions- oder Reaktionsmittel R kann in reiner Form (flüssig oder gasförmig) oder auch in Lösung (z.B. mit Wasser oder Wasserdampf) eingedüst werden. Die den Eindüsraum 4 und den Mischraum 6 umfassende rohrförmige Baueinheit 2 steht senkrecht. Am Ausgang dieser Baueinheit 2 erfährt das Abgas A eine 180°-Umlenkung in einem Umlenkraum 23 und tritt in dem nachgeschalteten Raum 14 oder SCR-Reaktor in zwei hintereinander angeordnete SCR-Katalysatoren 16, 18 ein. Das gereinigte Abgas A' verläßt die Einrichtung nach einer 90°-Umlenkung. Am Eingang und am Ausgang der Baueinheit 2 sind Mischer 24 bzw. 26 angeordnet. Zwecks Erleichterung der 180°-Umlenkung sind im oberen Umlenkraum 23 Leitbleche 28 vorgesehen.

Im Ausführungsbeispiel von Figur 1 wird eine schalldämmende Wirkung erreicht durch verschiedene Maßnahmen:
Zum ersten ist hier wiederum die erwähnte Auskleidung des Eindüs- und Mischraums 4, 6 mit dem Lochblech 22 vorgesehen.

Anstelle dieses Lochbleches 22 kann auch ein flexibles, dünnes Blech verwendet werden. Dieses Lochblech 22 ist mit einem absorbierenden Material, wie Stahlwolle, Keramikwolle, Stahlvlies oder Faservlies, als Auskleidung 20 hinterfüttert.

Zum zweiten ist eine Reflexionsdämpfung zwischen den Mischern 24, 26 vorgesehen. Dies bedeutet, daß der Abstand der Mischer 24, 26 auf die zu dämpfende Schallfrequenz abgestimmt ist.

Zum dritten ist eine Reflexionsdämpfung an der 180°-Umlenkung des Abgases A zwischen der Baueinheit 2 und dem SCR-Reaktor 14 vorgesehen. Diese Reflexionsdämpfung ist in Form einer schalldämmenden Auskleidung 30 an der oberen Innenwand eingezeichnet.

Bei dieser Ausführungsform sind weitere Umlenkungen im Bereich des Eindüs- und Mischraums 4 bzw. 6 möglich. Dann sollten die Abstände zwischen diesen Umlenkungen so gewählt werden, daß sich eine dämpfende Wirkung durch Resonanz ergibt.

Zu Figur 1 ist noch folgendes anzumerken: Die Umlenkung muß nicht notwendigerweise genau 180° betragen. Jede ümlenkung, die eine Reflexion des Schalls in stromauf gelegene Anlagenteile ermöglicht, ist verwendbar. Mit einer entsprechenden Auskleidung der Umlenkung ist sogar bei Umlenkungen kleiner als 90° eine Schallreflexion stromauf möglich.

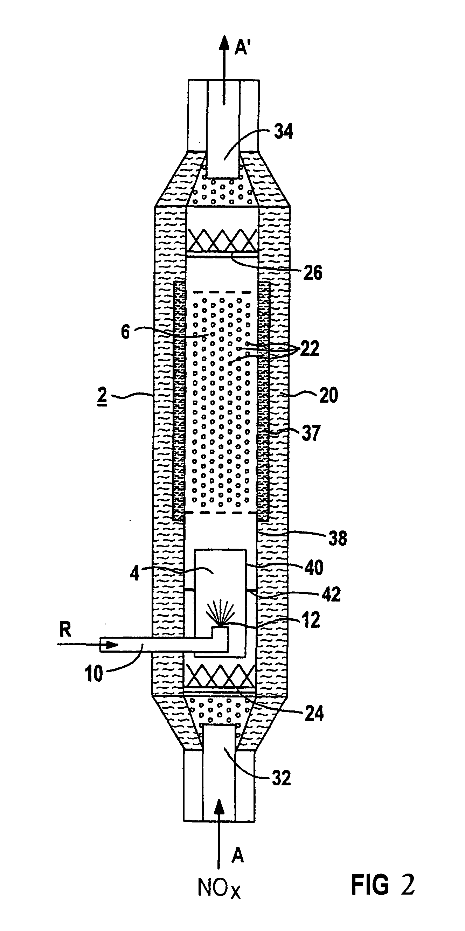

Die Ausführungsform nach Figur 2 zeigt einige Möglichkeiten zur Ausführung der kombinierten Baueinheit 2, die den Eindüsraum 4 und den Mischraum 6 beinhaltet. Es müssen nicht notwendigerweise alle dargestellten Merkmale gleichzeitig vorhanden sein.

Bei der Baueinheit 2 sind die Einströmseite und die Ausströmseite wiederum als Pfeifenresonatoren 32 bzw. 34 ausgebildet. Sie sind auf die zu dämpfende Schallfrequenz abgestimmt. Über die gesamte Rohrlänge ist die Baueinheit 2 mit einer schalldämmenden Auskleidung 20 versehen. Deren Material und Dicke sind ebenfalls auf die zu dämpfende Schallfrequenz abgestimmt. Im Bereich des Mischraums 6 befindet sich wiederum ein Lochblech 22. Hier sind die Lochgröße sowie die Länge der Strecke mit dem Lochblech 22 auf die zu dämpfende Schallfrequenz abgestimmt. Innerhalb der Baueinheit 2 befindet sich ein inneres Rohr 38, das dünnwandig ausgeführt ist. Es könnte auch zweischichtig mit einem Luftspalt zwischen den beiden Schichten ausgebildet sein. Auch hier ist wiederum der Abstand zwischen den beiden Mischern 24 und 26 auf die Schallfrequenz abgestimmt.

Mit 37 ist eine Hinterfütterung des Lochblechs 22 bezeichnet. Hierbei handelt es sich um ein abriebfestes Material, das temperaturbeständig ist und keinen Austrag durch das Lochblech 22 hindurch zuläßt.

Bei der Ausführungsform von Figur 2 ist im Bereich der Düse 12 ein Hüllrohr 40 vorgesehen. Dieses ist dünnwandig ausgeführt. Es kann auch zweischichtig mit einem Luftspalt zwischen den Schichten ausgebildet sein. Dieses Hüllrohr 40 ist durch eine Halterung 42 im Innenraum gehalten. Das Hüllrohr ist in Strömungsrichtung des Abgases A ausgerichtet.

## Patentansprüche

1. Einrichtung für die katalytische Beseitigung eines Schadstoffs (NOx) aus dem Abgas (A) einer Verbrennungsanlage, wie eines mit fossilem Brennstoff betriebenen Kraftwerks oder eines Verbrennungsmotors, mit einem Abgaskanal (8) zur Leitung des Abgases (A), mit einer Eindüs-Einrichtung (10), die zur Einbringung eines Reaktionsmittels (R) in das Abgas (A) in einem Eindüsraum (4) des Abgaskanals (8) vorgesehen ist, und mit einem in den Abgaskanal (8) eingebauten Katalysator (16, 18), wobei der Eindüsraum (4) und ein gegebenenfalls nachgeschalteter Mischraum (6), der zur Vermischung des Reaktionsmittels (R) mit dem Abgas vorgesehen ist, als Schalldämpfer ausgebildet sind,
**dadurch gekennzeichnet, daß** in Strömungsrichtung des Abgases (A) vor und hinter dem Eindüsraum (4) ein Mischer (24, 26) angeordnet ist, und daß der Abstand der beiden Mischer (24, 26) auf die zu dämpfende Frequenz des Schalls im Abgas (A) abgestimmt ist (Figuren 2 und 5).

2. Einrichtung nach Anspruch 1,
**dadurch gekennzeichnet, daß** der Eindüsraum (4) und/oder der Mischraum (6) mit einem Lochblech (22) oder einem flexiblen, dünnen, ein- oder doppelschichtigen Blech (38) ausgekleidet sind/ist (Figuren 2 und 5).

3. Einrichtung nach Anspruch 2,
**dadurch gekennzeichnet, daß** das Lochblech (22) oder das flexible Blech (38) mit einem schallabsorbierenden Material (37), wie Stahlwolle, Keramikwolle, Stahlvlies oder Faservlies, hinterfüttert ist (Figuren 2 und 5).

4. Einrichtung nach einem der Ansprüche 1 bis 3, wobei eine 180°-Umlenkung des Abgases (A) zwischen einem Eingangsteil des Abgaskanals (8) und dem Katalysator (16, 18) vorgesehen ist, **dadurch gekennzeichnet, daß** im Bereich der 180°-ümlenkung Mittel (30) zur Reflexionsdämpfung und/oder Absorptionsdämpfung vorgesehen sind (Fig. 2).

5. Einrichtung nach einem der Ansprüche 1 bis 4,
**dadurch gekennzeichnet, daß** der Eindüsraum (4) und der Mischraum (6) eine Baueinheit (2) bilden (Figuren 1 bis 5).

6. Einrichtung nach Anspruch 5,
**dadurch gekennzeichnet, daß** die Einströmseite und/oder die Ausströmseite der Baueinheit (2) als Pfeifenresonator (32, 34) ausgebildet sind/ist (Fig. 3 und 5).

7. Einrichtung nach Anspruch 5 oder 6,
**dadurch gekennzeichnet, daß** an der Ausströmseite der Baueinheit (2) eine 180°-Umlenkung des Abgases (A) vorgesehen ist (Figuren 2 und 4).

8. Einrichtung nach einem der Ansprüche 1 bis 7,
**dadurch gekennzeichnet, daß** der Eindüsraum (4) und/oder der Mischraum (6) mit einer schalldämmenden Auskleidung (20) versehen sind/ist (Figuren 1 und 5).

9. Einrichtung nach einem der Ansprüche 1 bis 8,
**dadurch gekennzeichnet, daß** die Eindüseinrichtung (10) im Bereich ihrer Düse (12) ein in Strömungsrichtung des Abgases (A) ausgerichtetes Hüllrohr (40) aufweist (Fig. 5).

## Claims

1. Device for the catalytic removal of a pollutant (NOx) from the exhaust gas (A) of a combustion system, such as a fossil-fired power plant or an internal combustion engine, with an exhaust-gas duct (8) for carrying the exhaust gas (A), with an injection device (10), which is provided for the purpose of introducing a reagent (R) into the exhaust gas (A) in an injection space (4) of the exhaust-gas duct (8), and with a catalytic converter (16, 18) installed in the exhaust-gas duct (8), the injection space (4) and a 'mixing space (6), which is connected downstream if appropriate and is provided for the purpose of mixing the reagent (R) with the exhaust gas, being designed as a muffler, **characterized in that** a mixer (24, 26) is arranged before and after the injection space (4) in the direction of flow of the exhaust gas (A), and **in that** the distance between the two mixers (24, 26) is matched to the frequency of the sound to be damped in the exhaust gas (A) (Figures 2 and 5).

2. Device according to Claim 1, **characterized in that** the injection space (4) and/or the mixing space (6) is/are lined with a perforated plate (22) or a thin, flexible single- or double-layer plate (38) (Figures 2 and 5).

3. Device according to Claim 2, **characterized in that** the perforated plate (22) or the flexible plate (38) is backed with a sound-absorbing material (37), such as steel wool, ceramic wool, steel web or fibre web (Figures 2 and 5).

4. Device according to one of Claims 1 to 3, a 180° deflection of the exhaust gas (A) being provided between an inlet part of the exhaust-gas duct (8) and the catalytic converter (16, 18), **characterized in that** means (30) for reflection damping and/or absorption damping are provided in the region of the 180° deflection (Fig. 2).

5. Device according to one of Claims 1 to 4, **characterized in that** the injection space (4) and the mixing space (6) form a constructional unit (2) (Figures 1 to 5).

6. Device according to Claim 5, **characterized in that** the inflow side and/or the outflow side of the constructional unit (2) is/are designed as a pipe resonator (32, 34) (Figs 3 and 5).

7. Device according to Claim 5 or 6, **characterized in that** a 180° deflection of the exhaust gas (A) is provided on the outflow side of the constructional unit (2) (Figures 2 and 4).

8. Device according to one of Claims 1 to 7, **characterized in that** the injection space (4) and/or the mixing space (6) is/are provided with a sound-deadening lining (20) (Figures 1 and 5).

9. Device according to one of Claims 1 to 8, **characterized in that**, in the region of its nozzle (12), the injection device (10) has a jacketing tube (40) aligned in the direction of flow of the exhaust gas (A) (Fig. 5).

## Revendications

1. Dispositif d'élimination catalytique d'une substance polluante (NOx) des gaz (A) d'échappement d'une installation de combustion, comme une centrale nucléaire à combustible fossile ou un moteur à combustion interne, comprenant un canal (8) de passage des gaz (A) d'échappement, un dispositif (10) d'injection, qui est destiné à introduire un agent (R) de réaction dans les gaz (A) d'échappement dans un espace (4) d'injection du canal (8) pour les gaz d'échappement, et un pot catalytique (16, 18) monté dans le canal (8) pour les gaz d'échappement, la chambre (4) d'injection et une chambre (6) de mélange éventuellement montée en aval et prévue pour mélanger l'agent (R) de réaction aux gaz d'échappement étant constituées en amortisseur de bruit, **caractérisé en ce qu'**il est monté en amont et en aval dans le sens d'écoulement des gaz (A) d'échappement de la chambre (4) d'injection un mélangeur (24, 26) et ce que la distance entre les deux mélangeurs (24, 26) est accordée à la fréquence à amortir du bruit dans les gaz (A) d'échappement (figures 2 et 5).

2. Dispositif suivant la revendication 1, **caractérisé en ce que** la chambre (4) d'injection et/ou la chambre (6) de mélange est ou sont revêtue(s) d'une tôle (22) perforée ou d'une tôle (38) souple mince à une couche ou à deux couches (figures 2 et 5).

3. Dispositif suivant la revendication 2, **caractérisé en ce que** la tôle (22) perforée ou la tôle (38) souple est garnie d'un matériau (7) absorbant le bruit comme de la laine d'acier, de la laine de céramique, un non tissé d'acier ou un non tissé de fibres (figures 2 et 5.)

4. Dispositif suivant l'une des revendications 1 à 3, dans lequel il est prévu un renvoi à 180° des gaz (A) d'échappement entre une partie d'entrée du canal (8) pour les gaz d'échappement et le pot (16, 18) catalytique, **caractérisé en ce qu'**il est prévu dans la région du renvoi à 180° des moyens (30) d'amortissement de la réflexion et/ou d'amortissement de l'absorption (figure 2).

5. Dispositif suivant l'une des revendications 1 à 4, **caractérisé en ce que** la chambre (4) d'injection et la chambre (6) de mélange forment une unité (2) de construction (figures 1 à 5).

6. Dispositif suivant la revendication 5, **caractérisé en ce que** le côté d'entrée et/ou le côté de sortie de l'unité (2) de construction est ou sont constituée(s) en résonateur (32, 34) à sifflet (figures 3 et 5).

7. Dispositif suivant la revendication 5 ou 6, **caractérisé en ce qu'**il est prévu du côté de la sortie de l'unité (2) de construction un renvoi à 180° des gaz (A) d'échappement (figures 2 et 4).

8. Dispositif suivant l'une des revendications 1 à 7, **caractérisé en ce que** la chambre (4) d'injection et/ou la chambre (6) de mélange est/sont munie(s) d'un revêtement (20) amortissant le bruit (figures 1 et 5).

9. Dispositif suivant l'une des revendications 1 à 8, **caractérisé en ce que** le dispositif (10) d'injection comporte dans la région de sa buse (12) un tube (40) enveloppe dirigé dans le sens d'écoulement des gaz (A) d'échappement (figure 5).
